# DEMANDE DE BREVET EUROPEEN

(11) **EP 1 582 963 A1**
(43) Date de publication de la demande: **05.10.2005**
(21) Numéro de dépôt: 05102502.1
(22) Date de dépôt: 30.03.2005
(51) Int. Cl.: G06F 1/00, G07F 7/10

(54) **Dispositif de détection d'attaque d'une puce de circuit intégré**

(30) Priorité: 31.03.2004 FR 0450630
(71) Demandeur: ST MICROELECTRONICS S.A., 92120 Montrouge (FR)
(72) Inventeur: MARINET, Fabrice, 13790, Chateauneuf le rouge (FR); BOTELLA, Camille, 13790, ROUSSET (FR)
(74) Mandataire: de Beaumont, Michel

(57) **Abrégé**

L'invention concerne un circuit de détection d'attaque par contact d'une puce de circuit intégré comprenant un moyen (1) d'application d'un signal aléatoire à une première borne (V) d'au moins un premier chemin conducteur (2) formé dans au moins un premier niveau de métallisation de la puce, un moyen (4) de comparaison du signal appliqué avec un signal présent sur une deuxième borne (W) du chemin, et un moyen (3) pour retarder l'instant de comparaison par rapport à l'instant d'application, d'une durée (T) supérieure ou égale au retard de propagation (τ) apporté par le premier chemin.

## Description

La présente invention concerne un circuit pour détecter les attaques par prise de contact d'une puce de circuit intégré. Ce type d'attaque est généralement appelé "attaque par intrusion" et consiste à appliquer des pointes conductrices directement sur des zones de la puce pour en prélever des signaux. Dans un circuit intégré, les couches actives contiennent des circuits de traitement d'informations qui peuvent être sensibles comme par exemple dans les puces des cartes de crédit ou les puces de contrôle d'accès dans les applications de télévision à péage.

Pour protéger les circuits situés dans la zone active de toute intrusion frauduleuse, il est connu d'utiliser un écran couvrant toute la surface ou une zone de celle-ci. Cet écran est généralement constitué d'un ou de plusieurs chemins conducteurs formés dans un ou plusieurs niveaux de métallisation supérieurs à la zone active à protéger.

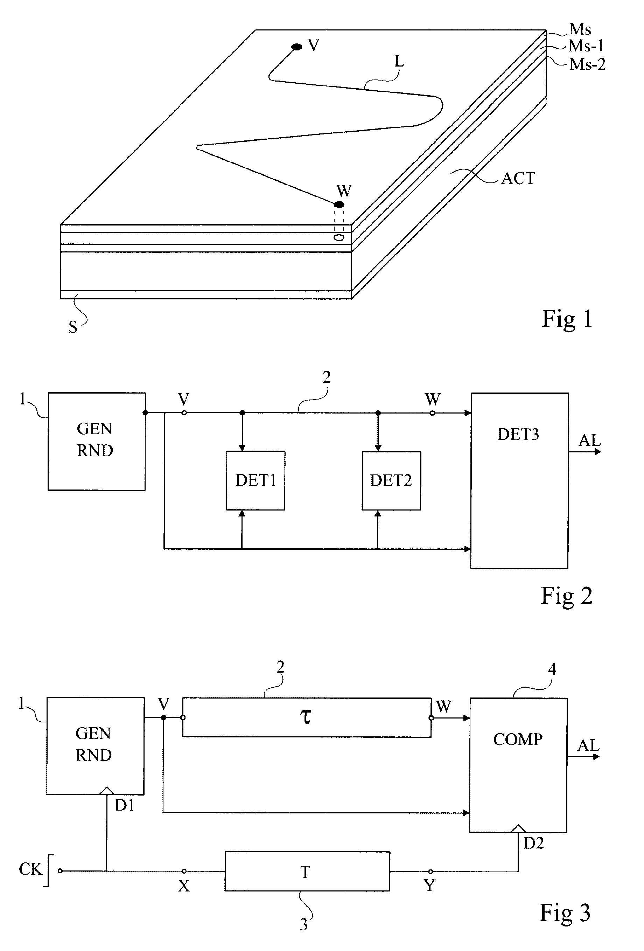

La figure 1 représente, par une vue en perspective de la puce, un exemple classique de zone active (ACT) recouverte par différents niveaux de métallisation (M1...Ms). Un chemin conducteur 2 délimité par les bornes (V) et (W) est formé dans un de ces niveaux, par exemple le niveau de métallisation supérieur Ms. Un contact vertical (via) permet de connecter le chemin conducteur formé dans le niveau de métallisation supérieur (Ms) à d'autres chemins formés dans les niveaux de métallisation inférieurs.

Le but de ces chemins conducteurs est de détecter une rupture de continuité ou toute modification électrique de leurs propriétés, par exemple résistance et capacité. Ces chemins conducteurs parcourent toute la surface ou seulement une zone du circuit à protéger de façon irrégulière et aléatoire. Si un "pirate" tente de traverser le niveau de métallisation contenant le chemin, par introduction d'une ou plusieurs pointes, un circuit de détection est censé détecter une rupture du chemin conducteur.

La figure 2 illustre, de façon très schématique et sous forme de blocs, un exemple classique de circuit de détection d'attaque d'une puce de circuit intégré.

Dans cet exemple, plusieurs circuits de détection (DET1, DET2, DET3) comparent un signal aléatoire appliqué par un générateur 1 (GEN RND) sur une première borne (V) du chemin conducteur 2 avec les signaux présents sur plusieurs autres bornes du chemin. Par exemple, toute différence entre le signal aléatoire appliqué et le signal présent sur la borne W de sortie est détectée et signifie une attaque par contact de la puce, symbolisée par le signal d'alarme (AL) dans la figure 2. Cette détection peut également se faire par tronçon de chemin conducteur, c'est-à-dire à des niveaux de longueurs intermédiaires (détecteurs DET1 et DET2) localisant le tronçon du chemin où l'attaque a été menée.

Un inconvénient d'une telle solution est qu'elle n'évite pas que le chemin conducteur soit doublé par un tronçon extérieur afin de simuler une continuité électrique.

L'invention vise à pallier les inconvénients des solutions connues. En particulier, l'invention vise à améliorer la détection d'attaques par intrusion sur une puce de circuit intégré. L'invention vise notamment à proposer une solution qui détecte toute tentative de déroutement du chemin protecteur.

Pour atteindre ces objets ainsi que d'autres, la présente invention prévoit un circuit de détection d'attaque par contact d'une puce de circuit intégré comprenant :
un moyen d'application d'un signal aléatoire à une première borne d'au moins un premier chemin conducteur formé dans au moins un premier niveau de métallisation de la puce ;
un moyen de comparaison du signal appliqué avec un signal présent sur une deuxième borne du chemin ; et
un moyen pour retarder l'instant de comparaison par rapport à l'instant d'application, d'une durée supérieure ou égale au retard de propagation apporté par le premier chemin.

Selon un mode de réalisation de la présente invention, le moyen d'application et le moyen de comparaison sont synchronisés par un même signal d'horloge dont la période constitue ladite durée du moyen pour retarder l'instant de comparaison.

Selon un mode de réalisation de la présente invention, ladite durée est obtenue par un deuxième chemin conducteur formé dans un deuxième niveau de métallisation de la puce.

Selon un mode de réalisation de la présente invention, ladite durée est obtenue par un deuxième chemin conducteur formé dans le même niveau que le chemin.

Selon un mode de réalisation de la présente invention, lesdits chemins conducteurs sont parallèles entre eux.

Selon un mode de réalisation de la présente invention, les projections respectives des deux chemins dans un plan parallèle au plan de la puce sont parallèles entre elles.

Selon un mode de réalisation de la présente invention, l'écartement entre les deux chemins conducteurs définit une capacité de couplage conditionnant ledit retard de propagation.

Selon un mode de réalisation de la présente invention, l'écartement entre les deux chemins conducteurs définit une capacité de couplage conditionnant ladite durée.

Selon un mode de réalisation de la présente invention, le circuit comporte en outre un moyen pour vérifier que la dite durée est comprise dans une plage prédéterminée.

L'invention prévoit également une puce de circuit intégré.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente, de façon très schématique et sous forme de blocs, un mode de réalisation d'un circuit de détection selon l'invention ;
la figure 4 représente, de façon très schématique et sous forme de blocs, un mode de réalisation préféré de la présente invention ;
les figures 4A et 4B illustrent des détails du circuit de la figure 4 selon un mode de réalisation de la présente invention ;
les figures 5A à 5E illustrent, sous forme de chronogrammes, le fonctionnement du circuit selon les figures 4 ; et
la figure 6 représente des variantes du circuit de l'invention.

Les mêmes éléments ont été désignés par les mêmes références aux différentes figures. Par souci de clarté, seuls les éléments nécessaires à la compréhension de l'invention ont été représentés aux figures et seront décrits par la suite. En particulier, l'exploitation des résultats des détections n'a pas été détaillée, l'invention étant compatible avec la mise en oeuvre de procédés classiques.

Une caractéristique de la présente invention est de vérifier la constance d'un retard de propagation d'un signal aléatoire véhiculé par un chemin conducteur formé dans un niveau de métallisation. Ce retard est inférieur à la période d'un signal d'horloge synchronisant les instants de comparaison. De préférence, ce signal d'horloge est lui-même conditionné par un autre chemin conducteur dans un niveau de métallisation.

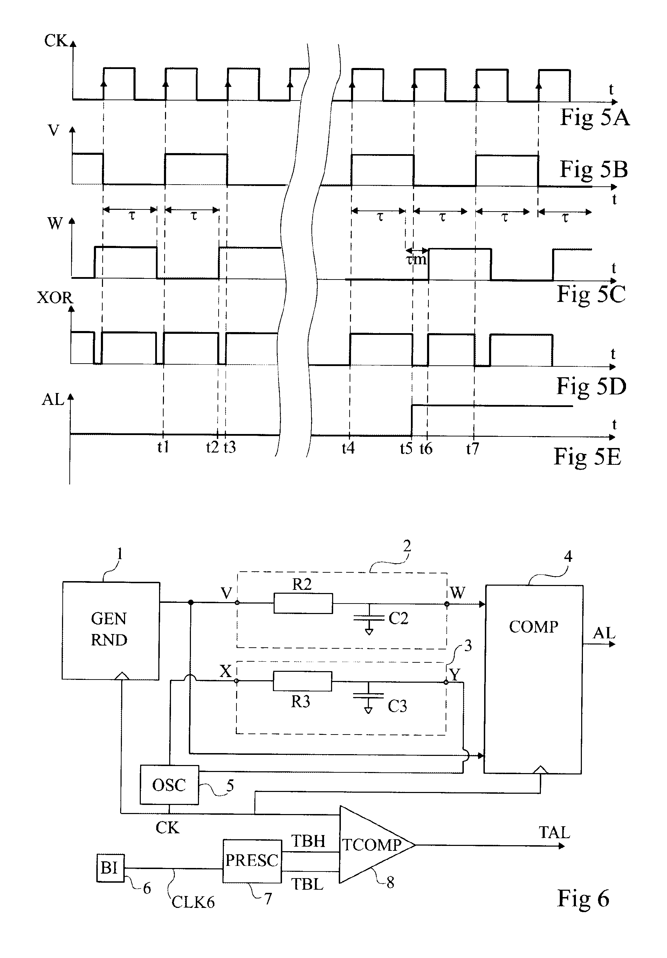

La figure 3 représente de façon schématique un mode de réalisation d'un circuit de détection d'attaque par intrusion d'une puce de circuit intégré selon l'invention. Dans cet exemple, un générateur 1 (GEN RND) applique un même signal aléatoire directement à une borne d'entrée d'un comparateur 4 (COMP) ainsi qu'à une première borne d'extrémité V d'un chemin conducteur 2 formé dans un premier niveau de métallisation de la puce (le terme "premier" ne se réfère pas à un ordre dans l'empilement des niveaux de métallisation). L'autre borne d'extrémité W du chemin est reliée directement à une deuxième borne d'entrée du comparateur 4. Le chemin conducteur 2 retarde d'une durée τ l'application du signal aléatoire sur la deuxième entrée du comparateur 4 à laquelle est reliée l'extrémité W. Un signal de synchronisation CK est appliqué à une entrée de déclenchement D1 du générateur 1 et, de préférence, à une première borne d'entrée X d'un chemin 3 formé dans un deuxième niveau de métallisation de la puce (le terme "deuxième" ne se réfère pas à un ordre dans l'empilement des niveaux de métallisation). L'autre borne d'extrémité Y du chemin 3 est reliée à une entrée de déclenchement D2 du comparateur 4. La comparaison est déclenchée par le signal de synchronisation CK lui-même retardé par rapport à l'instant d'application sur la borne V d'une durée T fixée par le chemin 3. La durée T est choisie pour être supérieure ou égale à la durée τ. La raison de cette condition sur les durées τ et T ressortira mieux de la description des figures 5. Le comparateur 4 fournit un résultat AL indicateur d'une modification de la durée τ ou T.

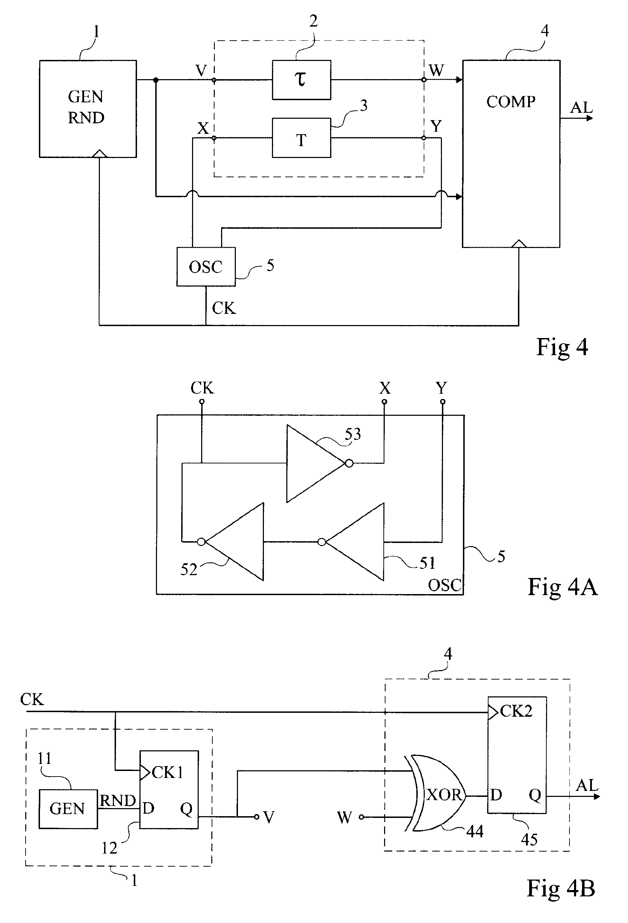

La figure 4 illustre un mode de réalisation préféré de l'invention dans lequel le signal déclenchant le comparateur 4 est appliqué sur la borne X du chemin 3 par une horloge 5 (OSC) de période T. La durée de la période T de l'horloge 5 est de préférence constituée par le retard de propagation du chemin conducteur 3 (figure 3) .

La figure 4A représente un exemple d'une partie d'un circuit d'horloge connu sous le nom d'oscillateur en anneau constituée de trois inverseurs 51, 52 et 53 en série entre les bornes Y et X (figure 4). La période de cette horloge en anneau correspond au retard de propagation matérialisé par le chemin conducteur 3. Le signal d'horloge CK est prélevé entre les deux inverseurs 52 et 53. Bien entendu, d'autres formes sont possibles.

La figure 4B représente un exemple de réalisation du comparateur 4 et du générateur 1. Le générateur 1 est constitué d'une bascule 12 de type D dont l'entrée de donnée reçoit un signal aléatoire RND fourni par un générateur 11. Le comparateur est constitué d'une bascule 45 de type D, et d'une porte XOR 44 (OU-EXCLUSIF). La sortie Q de la bascule 12 et l'entrée de la porte 44 sont respectivement reliées aux bornes V et W du chemin 2 (figure 4) matérialisant le retard τ. Le signal aléatoire RND est chargé sur la sortie Q de la bascule 12, à chaque fois que le front (par exemple montant) du signal d'horloge CK est appliqué sur son entrée d'horloge CK1. Le signal aléatoire ainsi chargé est ensuite appliqué à la fois sur la borne V et sur l'une des deux entrées de la porte XOR 44 dont l'autre entrée est reliée à la borne W. Le signal de sortie de la porte 44 est appliqué à l'entrée D de la bascule 45 pour être chargé sur sa sortie Q, à chaque fois que le front montant du signal d'horloge CK est appliqué sur son entrée d'horloge CK2. La sortie Q de la bascule 45 fournit le signal de détection AL. En fait, la porte XOR 44 compare le même signal aléatoire RND appliqué à la fois sans délai sur une entrée et retardé d'une durée τ par le chemin 2 (bornes V et W) sur l'autre. La sortie de la porte XOR 44 détecte toute différence entre un même signal aléatoire RND acheminé directement et indirectement par le chemin 2. Le fonctionnement des circuits des figures 4 ressortira mieux de la description des figures 5.

Les figures 5A à 5E illustrent, sous forme de chronogrammes, un exemple d'allures de signaux caractéristiques à différents points du circuit de détection. Ces figures représentent respectivement les signaux de l'horloge CK, du générateur 1 (RND), du signal sur la borne W du chemin 2, du signal de sortie de la porte 44 (XOR) et du signal de détection d'attaque AL. Ces chronogrammes représentent en partie gauche, un fonctionnement sans détection d'attaque, et en partie droite, un fonctionnement avec détection d'attaque.

En fonctionnement normal, supposons un état haut fourni par le générateur 1 (figure 5B) à un instant t1 à la borne V du chemin 2 et descendant ensuite à l'état bas à un instant t3. A un instant t2 (antérieur à l'instant t3), cet état haut apparaît sur la borne W (figure 5C) retardé d'une durée τ. En conséquence, la sortie de la porte 44 XOR (figure 5D) passe à l'état haut à l'instant t1 pour redescendre ensuite à l'état bas à l'instant t2. La sortie de la porte 44 étant prise en compte à chaque front d'horloge correspondant aux instants t1 et t3, la sortie AL (figure 5E) du comparateur 4 reste à l'état bas de l'instant t1 jusqu'à l'instant t3 indiquant qu'aucune modification de la durée τ n'a été détectée dans cet intervalle de temps. Le signal de sortie AL reste à l'état bas tant que la durée τ du chemin 3 n'est pas modifiée et que celle-ci reste inférieure ou égale à la période T de l'oscillateur 5. Le cas d'une durée τ supérieure à la période T correspond à une situation d'attaque résultant, par exemple, d'une rupture momentanée de la continuité électrique du chemin conducteur 2 consécutive à une intrusion physique dans le niveau de métallisation dans lequel est formé celui-ci.

Dans le cas d'un fonctionnement avec détection d'attaque, supposons un état haut fourni par le générateur 1 (figure 5B) à un instant t4 à la borne V du chemin 2 et descendant ensuite à l'état bas à un instant t5 (front montant de la période suivante du signal CK). Supposons également qu'à un instant t6 postérieur à l'instant t5, cet état haut apparaisse sur la borne W (figure 5C) retardé d'une durée τ augmentée d'une durée τm (supérieure à T-τ) simulant ainsi une modification de la durée τ par attaque. Dans ce cas, la sortie de la porte 44 XOR (figure 5D) est à l'état haut entre les intervalles de temps t4 à t5. Comme la sortie de la porte 44 est prise en compte à chaque front d'horloge (instants t4, t5 et t7), la sortie AL (figure 5E) du comparateur 4 passe à l'état haut dès l'instant t5 indiquant la modification de la durée τ survenue lors de la période T correspondant à l'intervalle de t4 à t5. De manière duale, une attaque provoquant la diminution de la période T en dessous de la période τ entraîne un passage à l'état haut de la sortie AL selon un raisonnement identique à celui décrit ci-dessous.

La figure 6 illustre une variante de l'invention dans laquelle les chemins conducteurs 2 et 3 sont formés parallèlement entre eux, de préférence dans un même niveau de métallisation. Chacun des chemins 2 et 3 est matérialisé par une résistance (R2) et (R3) en série entre ses bornes d'extrémité respectives V, W et X, Y, ainsi que par une capacité (C2) et (C3) respectivement placée entre les bornes de sortie W et Y et la masse du circuit intégré.

Les résistances R2 et R3 résultent du choix par conception de leurs caractéristiques électriques (résistivité du matériau conducteur) et géométriques (longueur et section). Les capacités C2 et C3 sont matérialisées par le couplage résultant de l'écartement entre les chemins conducteurs 2 et 3. Dans cet exemple, la durée τ du chemin 2 et la période T du chemin 3 sont définies par les constantes de temps des circuits RC matérialisés respectivement par R2C2 et R3C3 entre les bornes d'extrémités respectives V, W et X, Y des chemins 2 et 3.

Comme indiqué lors de la description de la figure 3, la période T de l'horloge 5 est choisie pour être supérieure ou égale à la durée τ.

De préférence, les chemins 2 et 3 sont parallèles entre eux et tels qu'il y ait une probabilité importante qu'une pointe coupe au moins l'un d'entre eux en cas de tentative d'intrusion. Pour les tracés eux-mêmes, on pourra s'inspirer des solutions connues sachant que plus le tracé est dense, meilleure est la protection. De préférence, les projections des chemins 2 et 3 dans un plan horizontal (parallèle au plan de la puce) sont parallèles entre elles sans être confondues (les chemins ne sont alors pas superposés).

Dans la variante de la figure 6, une horloge secondaire 6 (BT) applique un signal d'horloge CLK6 de période TB sur l'entrée d'un circuit 7 (PRESC) générant sur ses sorties deux signaux TBL et TBH dont les périodes sont respectivement inférieure et supérieure à la période T de l'horloge 5. Les signaux TBL et TBH du circuit 7 ainsi que l'horloge 5 sont appliqués sur les trois entrées d'un comparateur 8 (TCOMP) fournissant en sortie un résultat (TAL). Le comparateur 8 vérifie en permanence que la période T de l'horloge 5 est comprise dans une plage dont les butées basse et haute sont respectivement définies par les périodes TBL et TBH. Le résultat TAL du comparateur 8 est activé dès que la période T de l'horloge 5 sort de la plage délimitée par TBL et TBH, signifiant là encore qu'une attaque par modification de la résistance R3 et/ou de la capacité C3 du chemin 3 a été détectée. Ces périodes TBL et TBH sont choisies lors de la conception du circuit 7 de façon à couvrir une plage de période T compatible avec un fonctionnement réaliste du circuit intégré de la puce. Un tel mode de réalisation détecte notamment une disparition du signal d'horloge CK qui peut constituer une autre forme d'attaque.

De préférence, le circuit de l'horloge 6 est réalisé dans une zone active recouverte par différents niveaux de métallisation dans lesquels sont formés les chemins conducteurs 2 et 3 afin de se prémunir au maximum contre les attaques consistant à modifier sa valeur.

En variante, le circuit de vérification d'horloge peut se contenter de vérifier périodiquement l'existence d'un front en sortie de l'oscillateur.

Un avantage de la présente invention est qu'elle améliore la détection d'attaques par intrusion sur une puce de circuit intégré en liant intimement la période de l'horloge du circuit de détection à la puce. En outre, la présente invention apporte une protection accrue contre les attaques par injection forcée de signaux depuis l'extérieur de la puce, puisqu'elle est basée sur l'envoi de données aléatoires à chaque période d'horloge.

Un autre avantage de l'invention est qu'elle évite que le chemin conducteur soit doublé par un tronçon extérieur afin de simuler une continuité électrique.

Bien entendu, la présente invention est susceptible de diverses variantes et modifications qui apparaîtront à l'homme de l'art. En particulier, on pourra prévoir plusieurs chemins conducteurs formés dans différents niveaux de métallisation. De même, on peut envisager que plusieurs circuits de détection selon l'invention soient utilisés à différentes fréquences d'horloge et localisés dans différentes zones de la puce.

## Revendications

1. Circuit de détection d'attaque par contact d'une puce de circuit intégré comprenant :
un moyen (1) d'application d'un signal aléatoire (RND) à une première borne (V) d'au moins un premier chemin conducteur (2) formé dans au moins un premier niveau de métallisation (Ms) de la puce ;
un moyen (4) de comparaison du signal appliqué avec un signal présent sur une deuxième borne (W) du chemin, **caractérisé en ce qu'**il comporte
un moyen (3) pour retarder l'instant de comparaison par rapport à l'instant d'application, d'une durée (T) supérieure ou égale au retard de propagation (τ) apporté par le premier chemin.

2. Circuit selon la revendication 1, dans lequel le moyen d'application (1) et le moyen de comparaison (4) sont synchronisés par un même signal d'horloge (CK1) dont la période (T) constitue ladite durée du moyen (3) pour retarder l'instant de comparaison.

3. Circuit selon la revendication 1 ou 2, dans lequel ladite durée (T) est obtenue par un deuxième chemin conducteur (3) formé dans un deuxième niveau de métallisation de la puce.

4. Circuit selon la revendication 1 ou 2, dans lequel ladite durée (T) est obtenue par un deuxième chemin conducteur (3) formé dans le même niveau que le chemin (2).

5. Circuit selon la revendication 3 ou 4, dans lequel lesdits chemins conducteurs (2, 3) sont parallèles entre eux.

6. Circuit selon la revendication 5, dans lequel les projections respectives des deux chemins (2, 3) dans un plan parallèle au plan de la puce sont parallèles entre elles.

7. Circuit selon l'une quelconque des revendications 4 à 6, dans lequel l'écartement entre les deux chemins conducteurs (2, 3) définit une capacité de couplage conditionnant ledit retard de propagation (τ).

8. Circuit selon l'une quelconque des revendications 4 à 7, dans lequel l'écartement entre les deux chemins conducteurs (2, 3) définit une capacité de couplage conditionnant ladite durée (T).

9. Circuit selon l'une quelconque des revendications 1 à 8, comprenant en outre un moyen (8) pour vérifier que ladite durée (T) est comprise dans une plage (TBH, TBL) prédéterminée.

10. Puce de circuit intégré comprenant au moins un circuit conforme à l'une quelconque des revendications 1 à 9.
